# EUROPEAN PATENT APPLICATION

(11) **EP 4 610 615 A1**
(43) Date of publication of application: **03.09.2025**
(21) Application number: 24190394.7
(22) Date of filing: 23.07.2024
(51) Int. Cl.: G01M 11/00, H04B 10/07

(54) **MULTI-FUNCTIONAL OPTICAL POWER METER**

(30) Priority: 28.02.2024 CN 202420374314 U; 08.03.2024 CN 202420449762 U
(71) Applicant: Yongzhou Noyafa Electronic Co., Ltd., Yongzhou, Hunan (CN)
(72) Inventor: Lei, Ming, Yongzhou, Hunan (CN); Zhang, Jianping, Yongzhou, Hunan (CN)
(74) Representative: Petraz, Gilberto Luigi

(57) **Abstract**

A multi-functional optical power meter, in which the optical power meter includes a central control module, a power supply module, an optical power meter module, and a line-testing module or a line-alignment module & a line-finding module. The optical power meter module, the line-alignment module & line-finding module or the line-testing module are connected to the central control module respectively, and the power supply module is used to supply power. Compared to the prior art, provided in the present application is a multi-functional optical power meter, which allows for testing the optical power level, provides the function of line alignment, line finding and network cable mounting, which automatically determines the status of line alignment or cable mounting, automatically detects the open-circuit, short-circuit and circuit-breaking status of the network cable, and directly displays them on a display screen, so that the various test parameters are seen intuitively.

## Description

### Field

The present disclosure relates to the technical field of network test devices and, particularly, to a multi-functional optical power meter.

### Background

An optical power meter is an instrument used to measure the strength of an optical signal, typically used in optical communications, fiber-optic communications, and other optical applications. It is primarily used to determine the output power of a light source and to ensure that the signal strength in an optical network is within an acceptable range.

With the growing popularity of optical communications in people's lives, the optical power meter currently sold on the market, does not provide a line-finding function, and no display, which brings a certain degree of trouble to the network repair and maintenance personnel. When they work outside, in addition to carrying an optical power meter, they also have to carry a number of tools such as line testing devices and line alignment devices, which causes inconvenience to their work.

### Summary

In view of the aforementioned problems, provided in the present disclosure is a multi-functional optical power meter, which allows for testing the optical power level, provides the function of line alignment, line finding and network cable mounting, which automatically determines the status of line alignment or cable mounting, automatically detects the open-circuit, short-circuit and circuit-breaking status of the network cable, and directly displays them on a display screen, so that the various test parameters are seen intuitively.

The technical solutions adopted by the present disclosure are as follows.

A multi-functional optical power meter includes a central control module, a power supply module, an optical power meter module, and a multifunction module, in which the optical power meter module and the multifunction module are connected to the central control module respectively, the power supply module is used to supply power, the multifunction module includes a first function module and a second function module, the first function module includes a line-alignment module and a line-finding module, and the second function module includes a line-testing module.

Preferably, the optical power meter module includes a fiber-optic interface P3, a first channel selector U8, a second channel selector U14, a primary amplifier U10 and a secondary amplifier U5, the fiber-optic interface P3 is connected to an input port of the primary amplifier U10, an output port of the primary amplifier U10 is simultaneously connected to an input port of the secondary amplifier U5 and a common port of the first channel selector U8, an output port of the secondary amplifier U5 is connected to a data port of the central control module, each channel port of the first channel selector U8 is connected with resistors with different resistances respectively, each resistor is connected to a reverse input port of the primary amplifier U10 respectively, each channel port of the second channel selector U14 is connected to each channel port of the first channel selector U8 respectively, a common port of the second channel selector U14 is connected to a data port of the central control module, and channel gating control ports of the first channel selector U8 and the second channel selector U14 are connected to data ports of the central control module respectively.

Preferably, the line-alignment module includes a network interface J1 and a counter U4, each cable of the network interface J1 is connected to an output port of the counter U4 via a diode and a resistor respectively, diodes on each cable are connected in parallel with LEDs, a reset port of the counter U4 is connected to a collector of a triode Q13, the collector of the triode Q13 is connected to a +6V power supply, an emitter of the triode Q13 is grounded, a base of the triode Q13 is connected to a data port of the central control module, a pulse input port of the counter U4 is connected to a collector of a triode Q14, the collector of the triode Q14 is connected to a +6V power supply, an emitter of the triode Q14 is grounded, a base of the triode Q14 is connected to a data port of the central control module, and the network interface J1 comprises nine terminals, including RJ45-1, RJ45-2, RJ45-3, RJ45-4, RJ45-5, RJ45-6, RJ45-7, RJ45-8, and RJ45-9.

Preferably, the line-finding module includes a first line-finding circuit and a second line-finding circuit; the first line-finding circuit includes a triode Q12, a triode Q10, a triode Q9, and a triode Q11, the triode Q9 and the triode Q11 form a complementary amplifier circuit, a base of the triode Q12 is connected to a data port of the central control module via a resistor R24, the resistor R24 is connected in parallel with a capacitor C19, an emitter of the triode Q12 is grounded, the emitter of the triode Q12 is connected to the base of the triode Q12 via a resistor R26, a collector of the triode Q12 is connected to a +6V power supply, the collector of the triode Q12 is further connected to a base of a triode Q10, an emitter of the triode Q10 is grounded, a collector of the triode Q10 is connected to a +6V power supply, the collector of the triode Q10 is connected to a base of the triode Q9 and a base of the triode Q11, an emitter of the triode Q9 is connected to an emitter of the triode Q11, a collector of the triode Q9 is connected to a +6V power supply, a collector of the triode Q11 is grounded, and the terminals RJ45-4, RJ45-5, RJ45-7, RJ45-8 of the network interface J1 are connected to the emitter of the triode Q9 and the emitter of the triode Q11 via capacitors respectively; and the second line-finding circuit includes a triode Q8, a triode Q5, and a triode Q7, the triode Q5 and the triode Q7 form a complementary amplifier circuit, a base of the triode Q8 is connected to a data port of the central control module via a resistor R15, the resistor R15 is connected in parallel with a capacitor C6, an emitter of the triode Q8 is grounded, the emitter of the triode Q8 is connected to a base of the triode Q8 via a resistor R19, a collector of the triode Q8 is connected to a +6V power supply, the collector of the triode Q8 is connected to a base of the triode Q5 and a base of the triode Q7, an emitter of the triode Q5 is connected to an emitter of the triode Q7, a collector of the triode Q5 is connected to a +6V power supply, a collector of the triode Q7 is grounded, and the terminals RJ45-1, RJ45-2, RJ45-3, RJ45-6, RJ45-9 of the network interface J1 are connected to the emitter of the triode Q5 and the emitter of the triode Q7 via capacitors respectively.

Preferably, the line-testing module includes a network interface J5, a counter U12, a channel selector U13, and a counter U11, each cable of the network interface J5 is connected to an output port of the counter U12 via an MOS transistor and a light-emitting diode respectively, gates of each MOS transistor are all connected to a collector of a triode Q17, the collector of the triode Q17 is connected to a +9V power supply, an emitter of the triode Q17 is grounded, a base of the triode Q17 is connected to a data port of the central control module, a reset port of the counter U12 is connected to a collector of a triode Q14, the collector of the triode Q14 is connected to a +9V power supply, an emitter of the triode Q14 is grounded, a base of the triode Q14 is connected to a data port of the central control module, a pulse input port of the counter U12 is connected to a collector of a triode Q16, the collector of the triode Q16 is connected to a +9V power supply, an emitter of the triode Q16 is grounded, a base of the triode Q16 is connected to a data port of the central control module, each cable of the network interface J5 is simultaneously connected to an output port of the channel selector U13 via an MOS transistor respectively, gates of each MOS transistor are all connected to a collector of a triode Q5, the collector of the triode Q5 is connected to a +9V power supply, an emitter of the triode Q5 is grounded, a base of the triode Q5 is connected to a data port of the central control module, a channel gating control port of the channel selector U13 is connected to the data port of the central control module, and a common port of the channel selector U13 is connected to the counter U11.

Preferably, a data port of the central control module is connected with a display module, and the display module adopts a display interface.

Preferably, the data port of the central control module is connected with a back light module and the back light module adopts a back light interface P4 when the multifunction module comprises a first function module.

Preferably, a data port of the central control module is connected with a red-light-pen module, the red-light-pen module includes a red-light-pen driving chip U2 and a red-light-pen connector P1, the red-light-pen driving chip U2 is connected to the data port of the central control module, and the red-light-pen connector P1 is connected to the red-light-pen driving chip U2.

Preferably, a data port of the central control module is connected with a work indication module, the work indication module includes a light-emitting diode LED1 and a triode Q4, a positive pole of the light-emitting diode LED1 is connected to a +3.3V power supply, an emitter of the triode Q4 is grounded, and a base of the triode Q4 is connected to the data port of the central control module via a current limiting resistor R11;

when the multifunction module includes the first function module, a negative pole of the light-emitting diode LED1 is connected to a collector of the triode Q4; and when the multifunction module includes the second function module, a negative pole of the light-emitting diode LED1 is connected to a collector of the triode Q4 via a current limiting resistor R10.

Preferably, the power supply module includes a charging interface, a charging management module, a lithium battery, and a power management module, the charging interface adopts a USB interface J3, the charging interface is connected to a power input port of the charging management module, the lithium battery is connected to a power input port of the charging management module, and the lithium battery is connected to the power management module.

Preferably, the lithium battery is connected with a voltage regulator chip U3.

Preferably, a power output port of the power management module is connected with a voltage regulator chip U6 when the multifunction module includes the second function module.

Compared with the prior art, the beneficial effect of the present disclosure is as follows: provided in the present disclosure is a multi-functional optical power meter, which allows for testing the optical power level, provides the function of line alignment, line finding and network cable mounting, which automatically determines the status of line alignment or cable mounting, automatically detects the open-circuit, short-circuit and circuit-breaking status of the network cable; it also emits a laser to detect the optical fiber circuit and directly displays the same on a display screen, so that the various test parameters are seen intuitively.

### Brief description of the drawings

Fig. 1 is a circuit block diagram of the present disclosure.
Fig. 2 is a circuit diagram of the central control module part corresponding to the first function module in the present disclosure.
Fig. 3 is a circuit diagram of the central control module part corresponding to the second function module in the present disclosure.
Fig. 4 is a circuit diagram of the optical power meter module part corresponding to the first function module in the present disclosure.
Fig. 5 is a circuit diagram of the optical power meter module part corresponding to the second function module in the present disclosure.
Fig. 6 is a circuit diagram of the red-light-pen module part of the present disclosure.
Fig. 7 is a circuit diagram of the display module part corresponding to the first function module in the present disclosure.
Fig. 8 is a circuit diagram of the display module part corresponding to the second function module in the present disclosure.
Fig. 9 is a circuit diagram of the indicator module part corresponding to the first function module in the present disclosure.
Fig. 10 is a circuit diagram of the indicator module part corresponding to the second function module in the present disclosure.
Fig. 11 is a circuit diagram of the charging circuit part corresponding to the first function module in the present disclosure.
Fig. 12 is a circuit diagram of the charging circuit part corresponding to the second function module in the present disclosure.
Fig. 13 is a circuit diagram of the power supply module part corresponding to the first function module in the present disclosure.
Fig. 14 is a circuit diagram of the power supply module part corresponding to the second function module in the present disclosure.
Fig. 15 is a circuit diagram of the line alignment module part of the present disclosure.
Fig. 16 is a circuit diagram of the line finding module part of the present disclosure.
Fig. 17 is a circuit diagram of the line testing channel select module part of the present disclosure.
Fig. 18 is a circuit diagram of the line testing display module part of the present disclosure.
Fig. 19 is a circuit diagram of the line testing interface module part of the present disclosure.
Fig. 20 is a circuit diagram of the line testing channel select conduction module part of the present disclosure.
Fig. 21 is a circuit diagram of the line testing channel control module part of the present disclosure.

### Detailed description of the embodiments

The present embodiment is a preferred embodiment of the present disclosure, and any other principle and basic structure that is the same or similar to the present embodiment is within the scope of protection of the present disclosure.

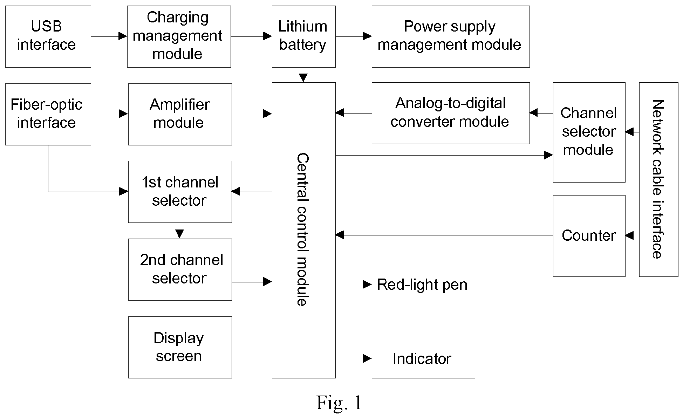

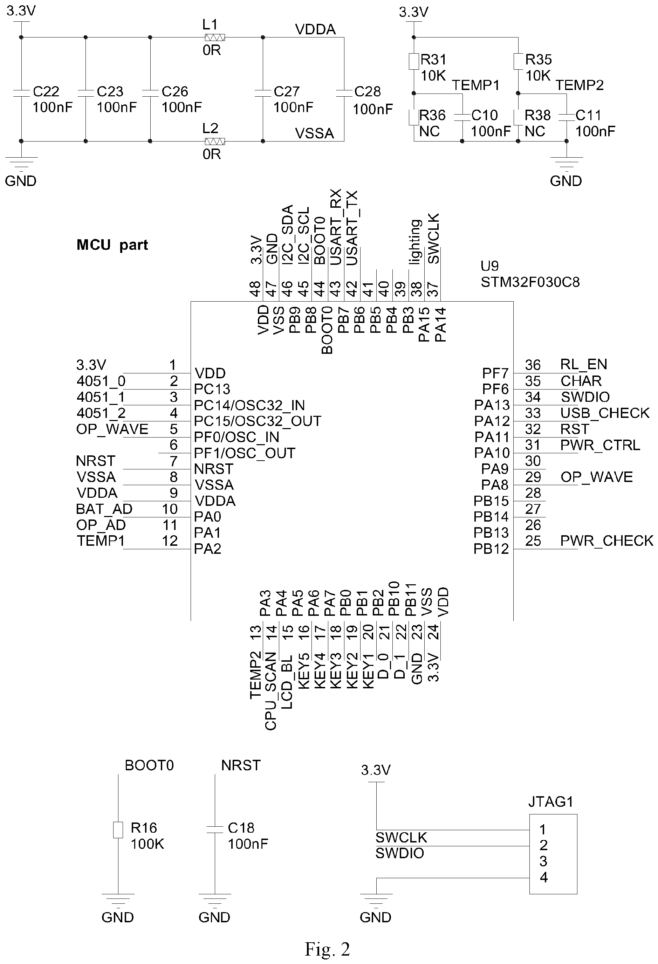

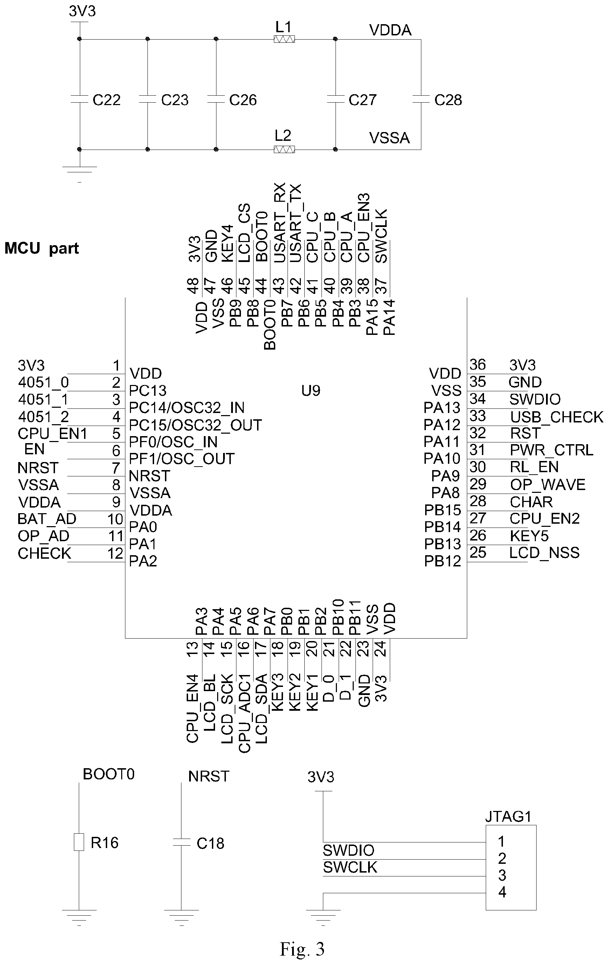

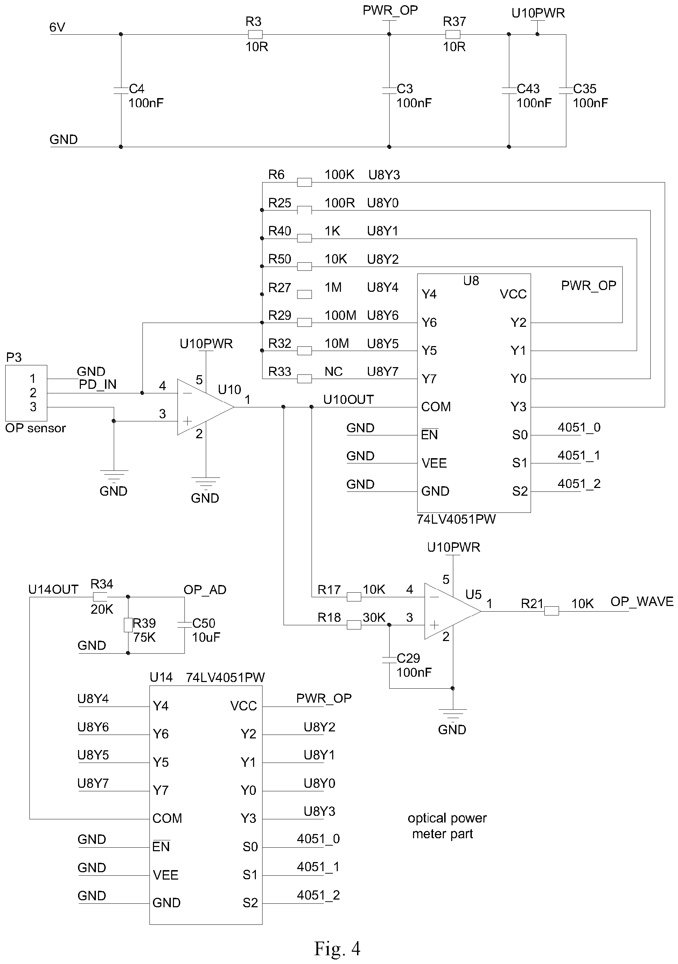

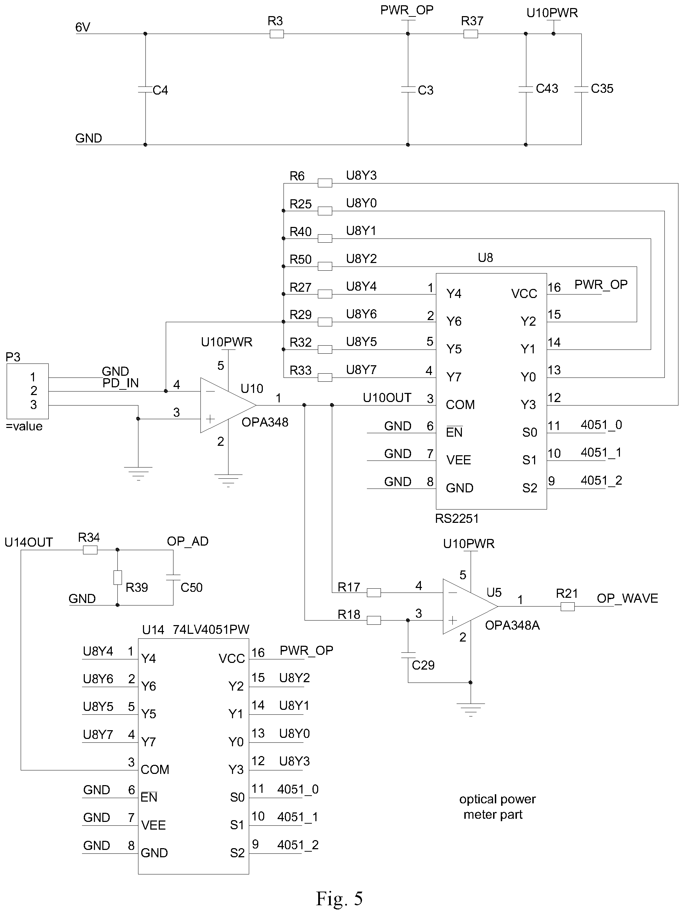

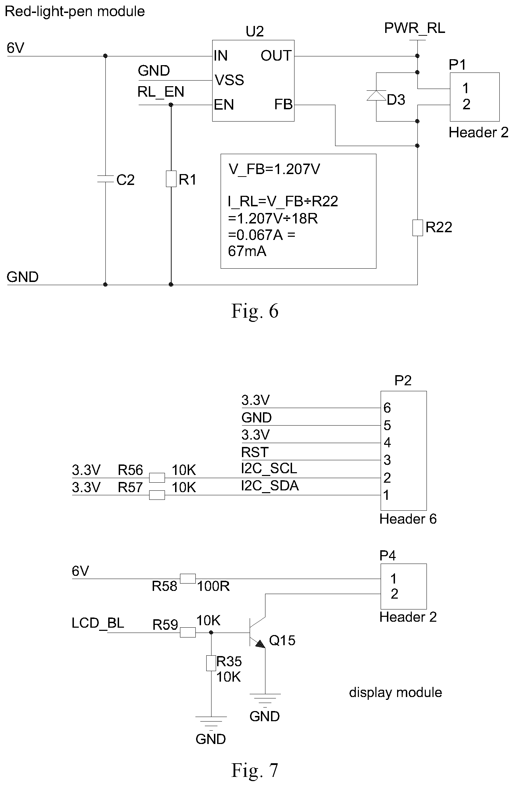

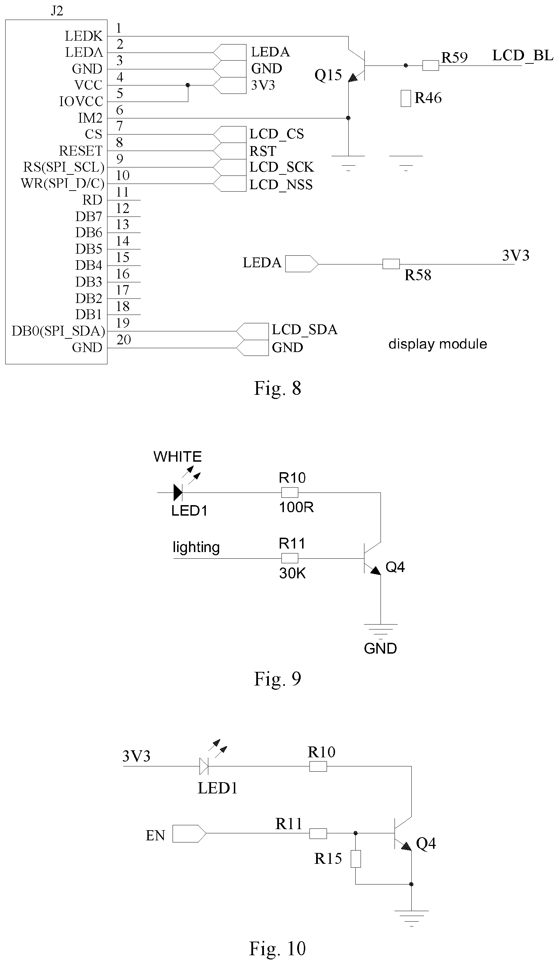

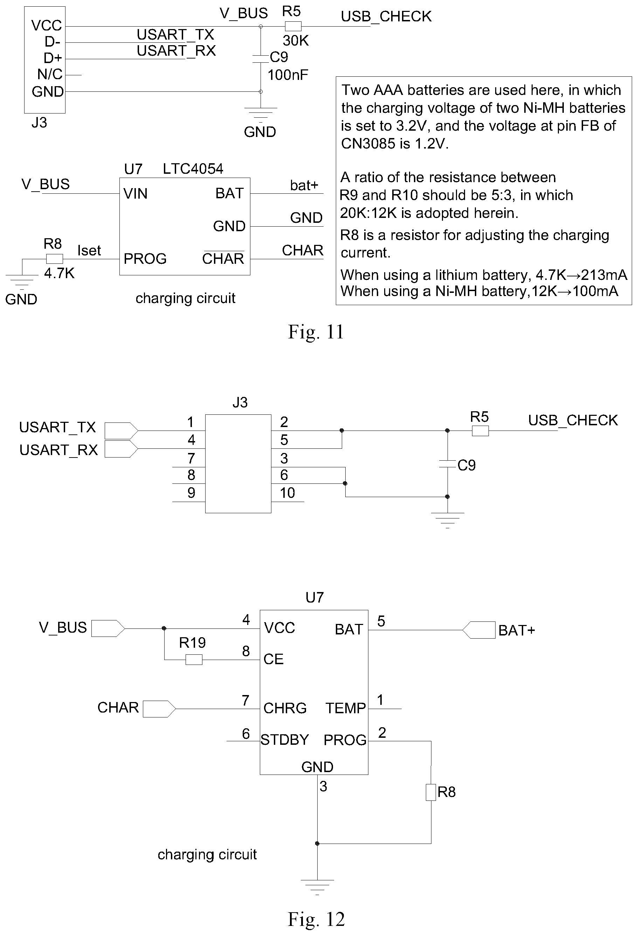

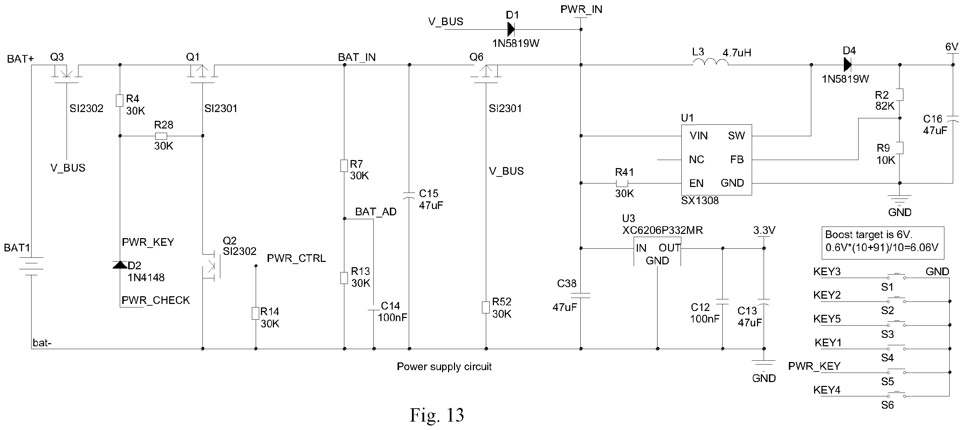

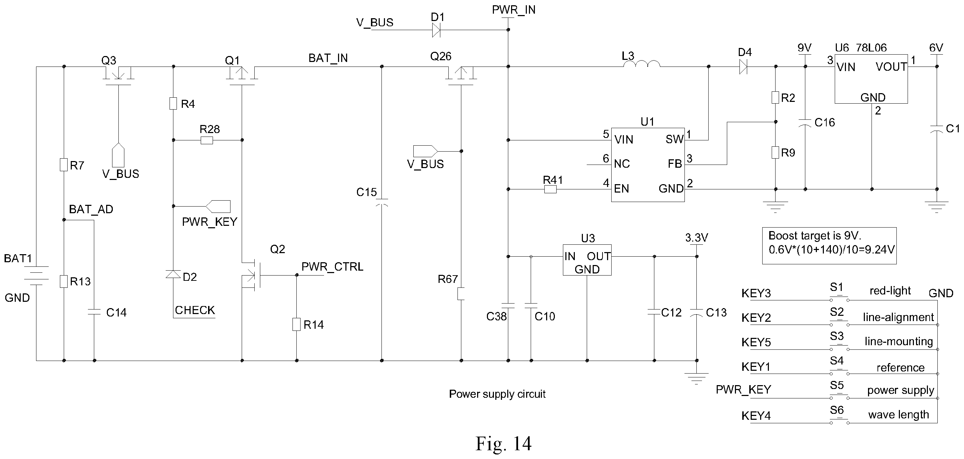

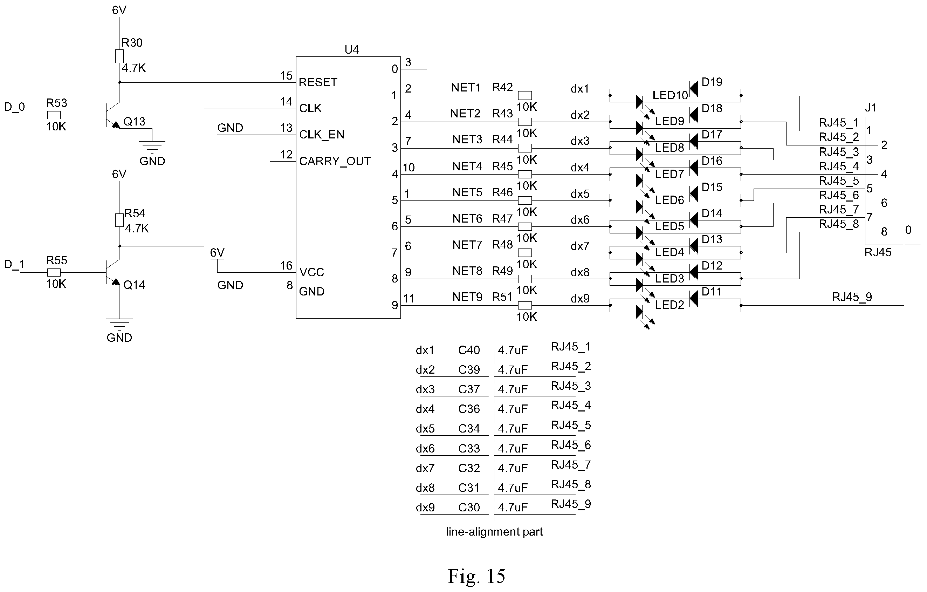

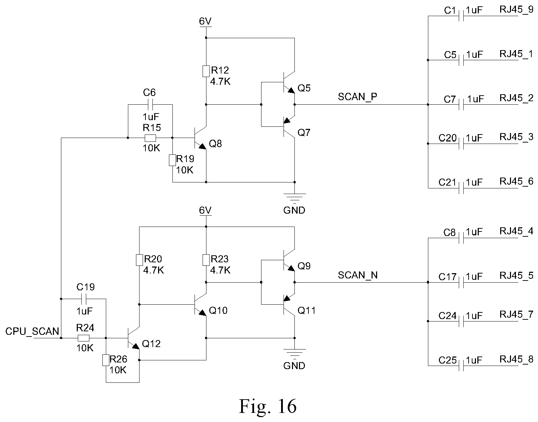

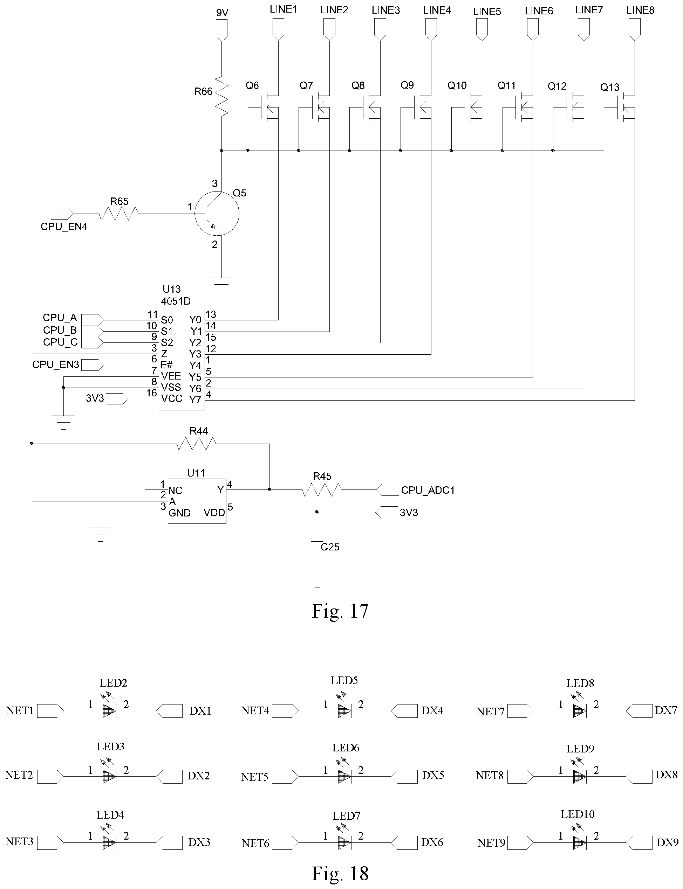

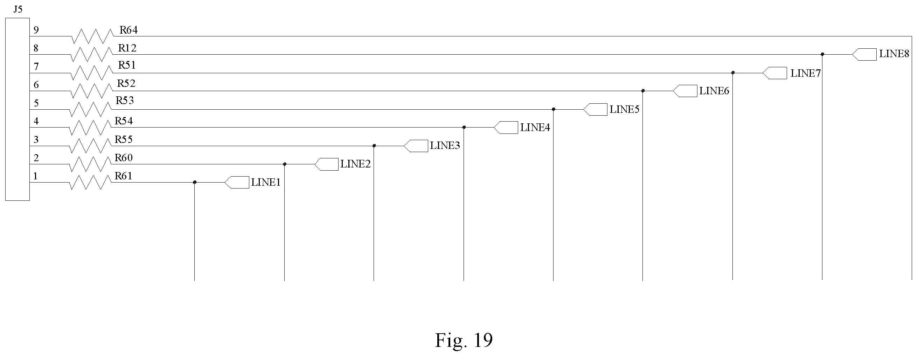

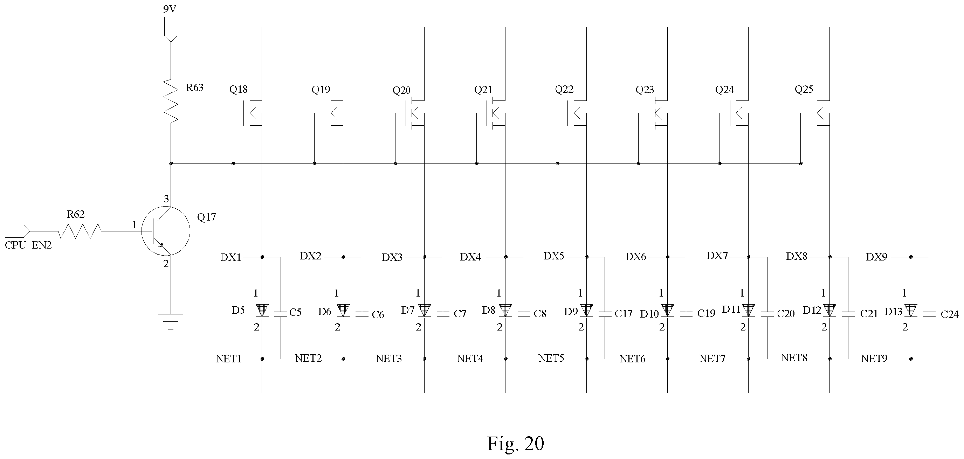

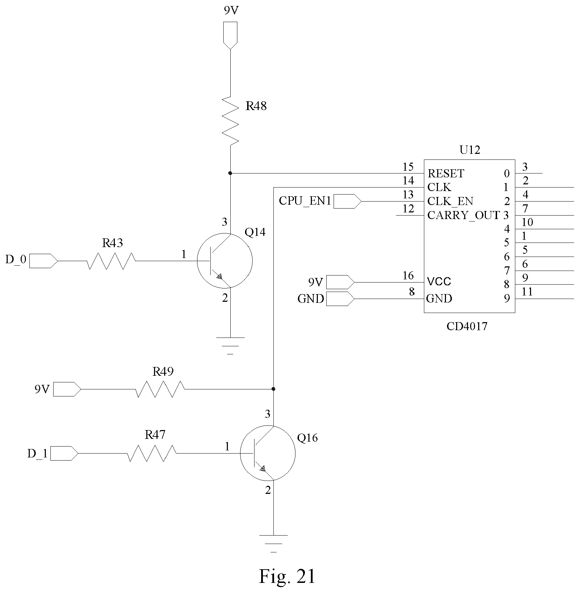

Referring to Figs. 1-21, protected in the present disclosure is a multi-functional optical power meter, which mainly includes a central control module, a power supply module, an optical power meter module, and a multifunction module, in which the optical power meter module and the multifunction module are connected to the central control module respectively, the power supply module is used to supply power, the multifunction module includes a first function module and a second function module, the first function module includes a line-alignment module and a line-finding module, and the second function module includes a line-testing module.

In the present embodiment, when the multifunction module includes the first function module, the central control module adopts an MCU of model STM32F030C8; when the multifunction module includes the second function module, the central control module adopts an MCU of model MH2030ACCT7. For specific implementations, it is also feasible to replace the MCU with another model.

In the present embodiment, the optical power meter module includes a fiber-optic interface P3, a first channel selector U8, a second channel selector U14, a primary amplifier U10 and a secondary amplifier U5, the fiber-optic interface P3 is connected to an input port of the primary amplifier U10, an output port of the primary amplifier U10 is simultaneously connected to an input port of the secondary amplifier U5 and a common port of the first channel selector U8, an output port of the secondary amplifier U5 is connected to a data port of the central control module, each channel port of the first channel selector U8 is connected with resistors with different resistances respectively, each resistor is connected to a reverse input port of the primary amplifier U10 respectively, each channel port of the second channel selector U14 is connected to each channel port of the first channel selector U8 respectively, a common port of the second channel selector U14 is connected to a data port of the central control module, and channel gating control ports of the first channel selector U8 and the second channel selector U14 are connected to data ports of the central control module respectively, in which the channels are selected under the control of the central control module.

In the present embodiment, both the primary amplifier U10 and the secondary amplifier U5 adopt an operational amplifier of model OPA348, and the second channel selector U14 adopts a channel selecting chip of model 74LV4051PW. When the multifunction module includes the first function module, the first channel selector U8 adopts a channel selecting chip of model 74LV4051; when the multifunction module includes the second function module, the first channel selector U8 adopts a channel selecting chip of model RS2251. For specific implementations, other chips with the same function may also be used as alternatives.

When in use, the optical receiving sensor is connected to the fiber-optic interface P3, and the converted electrical signal passes through the primary amplifier U10 and the secondary amplifier U5. After two stages of amplification, the signal is sent to the pin 29 of the central control module for data calculation via the series-connected current limiting resistor R21. The first channel selector U8 is an 8-channel electronic toggle switch that switches different resistors to change the amplification gain of the primary amplifier U10 for different power source tests. The second channel selector U14 is an 8-channel electronic toggle switch that collects the AP_ADC signal from the common port (i.e., COM interface) and sends it to the data port of the central control module to collect the amplifier amplification value for calculation and adjustment to fit the amplifier's required gain.

The line-alignment module includes a network interface J1 and a counter U4, each cable of the network interface J1 is connected to an output port of the counter U4 via a diode and a resistor respectively, diodes on each cable are connected in parallel with LEDs, a reset port of the counter U4 is connected to a collector of a triode Q13, the collector of the triode Q13 is connected to a +6V power supply, an emitter of the triode Q13 is grounded, a base of the triode Q13 is connected to a data port of the central control module, a pulse input port of the counter U4 is connected to a collector of a triode Q14, the collector of the triode Q14 is connected to a +6V power supply, an emitter of the triode Q14 is grounded, a base of the triode Q14 is connected to a data port of the central control module, the network interface J1 is an RJ45 interface, and the network interface J1 includes nine terminals, including RJ45-1, RJ45-2, RJ45-3, RJ45-4, RJ45-5, RJ45-6, RJ45-7, RJ45-8, and RJ45-9. In the present embodiment, the counter U4 adopts a counter chip of model CD4017. Pin 22 D_1 of the central control module U9 outputs a 500 ms pulsed square wave signal which is sent to the clock terminal of counter U4 (i.e., CLK pin) via triode Q14. A pulse of counter U4 from the output port of counter U4 (i.e., pin 2) is output to the terminal 1 of the RJ45 interface (RJ45-1) of the network interface J1 via the diode D19, and the other signal from the output port of the counter U4 (i.e., pin 2) is connected to the positive pole of the light-emitting diode LED 10. If the line is working properly, LED2 lights up, and if the line is broken, LED 10 turns off, and each line corresponds to their corresponding light-emitting diode. RJ45 terminals 2-9 (i.e., RJ45-2, RJ45-3, RJ45-4, RJ45-5, RJ45-6, RJ45-7, RJ45-8, and RJ45-9) are based on the same principle as terminal 1. The RJ45 interface is connected to a remoter via the network cable, so as to determine whether the network cable is disconnected.

The line-finding module includes a first line-finding circuit and a second line-finding circuit; the first line-finding circuit includes a triode Q12, a triode Q10, a triode Q9, and a triode Q11, the triode Q9 and the triode Q11 form a complementary amplifier circuit, a base of the triode Q12 is connected to a data port of the central control module via a resistor R24, the resistor R24 is connected in parallel with a capacitor C19, an emitter of the triode Q12 is grounded, the emitter of the triode Q12 is connected to the base of the triode Q12 via a resistor R26, a collector of the triode Q12 is connected to a +6V power supply, the collector of the triode Q12 is further connected to a base of a triode Q10, an emitter of the triode Q10 is grounded, a collector of the triode Q10 is connected to a +6V power supply, the collector of the triode Q10 is connected to a base of the triode Q9 and a base of the triode Q11, an emitter of the triode Q9 is connected to an emitter of the triode Q11, a collector of the triode Q9 is connected to a +6V power supply, a collector of the triode Q11 is grounded, and the terminals RJ45-4, RJ45-5, RJ45-7, RJ45-8 of the network interface J1 are connected to the emitter of the triode Q9 and the emitter of the triode Q11 via capacitors respectively; and the second line-finding circuit includes a triode Q8, a triode Q5, and a triode Q7, the triode Q5 and the triode Q7 form a complementary amplifier circuit, a base of the triode Q8 is connected to a data port of the central control module via a resistor R15, the resistor R15 is connected in parallel with a capacitor C6, an emitter of the triode Q8 is grounded, the emitter of the triode Q8 is connected to a base of the triode Q8 via a resistor R19, a collector of the triode Q8 is connected to a +6V power supply, the collector of the triode Q8 is connected to a base of the triode Q5 and a base of the triode Q7, an emitter of the triode Q5 is connected to an emitter of the triode Q7, a collector of the triode Q5 is connected to a +6V power supply, a collector of the triode Q7 is grounded, and the terminals RJ45-1, RJ45-2, RJ45-3, RJ45-6, RJ45-9 of the network interface J1 are connected to the emitter of the triode Q5 and the emitter of the triode Q7 via capacitors respectively. When in use, the pin 14 CPU_SCAN of the central control module U9 outputs a 455K square wave signal, which is divided into two paths, one is coupled to the triode Q12 and the triode Q11 via the capacitor C19 and resistor R24, amplified by a two-stage triode, formed by the triode Q9 and the triode Q11 a complementary amplification circuit, and then coupled to the 4th, 5th, 7th, and 8th terminals of the RJ45 interface (i.e., terminal RJ45-4, RJ45-5, RJ45-7, and RJ45-8 in the network interface J1) via the capacitor C8, capacitor C17, capacitor C24, and capacitor C25, respectively; another one is coupled to the triode Q8 to be amplified via the capacitor C6 and the resistor R15, formed by the triode Q5 and the triode Q7 a complementary amplification circuit, and then coupled to the 6th, 3rd, 2nd, 1st, and 9th terminals of the RJ45 interface (i.e., terminal RJ45-1, RJ45-2, RJ 45-3, RJ45-6, and RJ45-9 in the network interface J1) via the capacitor C1, capacitor C5, capacitor C7, capacitor C20, and capacitor C21, respectively. The receiver antenna is detected by receiving the emitted signal. If the line is working properly, the receiver will emit a beep sound prompt, if there is a break point, the emitted signal is interrupted, and the receiver is unable to receive the electromagnetic signal. With no beep sound prompt, the open circuit position is therefore determined.

In the present embodiment, the line-testing module includes a network interface J5, a counter U12, a channel selector U13, and a counter U11, each cable of the network interface J5 is connected to an output port of the counter U12 via an MOS transistor and a light-emitting diode respectively, gates of each MOS transistor are all connected to a collector of a triode Q17, the collector of the triode Q17 is connected to a +9V power supply, an emitter of the triode Q17 is grounded, a base of the triode Q17 is connected to a data port of the central control module, the conduction of the base of the triode Q17 is controlled by the central control module, a reset port (i.e., the RESET port) of the counter U12 is connected to a collector of a triode Q14, the collector of the triode Q14 is connected to a +9V power supply, an emitter of the triode Q14 is grounded, a base of the triode Q14 is connected to a data port of the central control module, a pulse input port of the counter U12 is connected to a collector of a triode Q 16, the collector of the triode Q16 is connected to a +9V power supply, an emitter of the triode Q16 is grounded, a base of the triode Q16 is connected to a data port of the central control module, each cable of the network interface J5 is simultaneously connected to an output port of the channel selector U13 via an MOS transistor respectively, gates of each MOS transistor are all connected to a collector of a triode Q5, the collector of the triode Q5 is connected to a +9V power supply, an emitter of the triode Q5 is grounded, a base of the triode Q5 is connected to a data port of the central control module, the conduction of the base of the triode Q5 is controlled by the central control module, a channel gating control port of the channel selector U13 is connected to the data port of the central control module, and a common port (i.e., the Z port) of the channel selector U13 is connected to the counter U11. In the present embodiment, the counter U11 adopts a counter chip of model ICM7555 or 74LVC1G14DBVR. When a finished registered jack is inserted, each port of the Rj45/RJ11 connector is changed in capacitance since the finished ports are connected with metal wires, which increases the capacitance of the ports. The central control module outputs a pulsed square wave signal to the three ports of channel selector U13 (i.e., CPU_A, CPU_B, CPU_C). The channel selector U13 may be controlled to capture the frequency of each channel cyclically (8 channels Q0-Q7 in total). Thus, the variable frequency of each channel is output to the central control module by the capacitor-modulated oscillator consisting of the counter U11, after comparing and judging by the central control module and the RJ45 on the reference frequency when the registered jack is not inserted, the line installation status judged by the corresponding line is shown on the display.

In the present embodiment, the channel selector U13 adopts a channel selecting chip of model 4051D, the counter U11 adopts a counter of model ICM7555 or SN74LVC1G14DBVR. For specific implementations, other chips with the same function may also be used as alternatives.

When in use, the pulse signal is output from pin 22 (i.e., D_1) of the central control module to the clock port of counter U12 (i.e., CLK pin) via the triode Q16, the pulse of the counter U12 is output from the output port of the counter U12 (i.e., pin 2) to the first line of the network interface J1 via the diode D5 and the MOS transistor Q18, and the other signal NT1 from the output port of the counter U12 (i.e., pin 2) is connected to the positive pole of the light-emitting diode LED2. If the line is working properly, the LED2 lights up, if the line is disconnected, the LED2 goes out. Each line of the network interface J1 corresponds to a light-emitting diode, and each line of the network cable is determined to be on or off in a cyclic manner.

In the present embodiment, a data port of the central control module is connected with a display module. When the multifunction module includes the first function module, the display module adopts a display interface P2, the data port of the central control module is further connected with a back light module, and the back light module adopts a back light interface P4. When the multifunction module includes the second function module, the display module adopts a display interface J2, to which an LCD display screen may be connected. Various test parameters may be visualized on the LCD screen which may display such as light source power and light source frequency.

In the present embodiment, a data port of the central control module is connected with a red-light-pen module, the red-light-pen module comprises a red-light-pen driving chip U2 and a red-light-pen connector P1, the red-light-pen driving chip U2 is connected to the data port of the central control module, and the red-light-pen connector P1 is connected to the red-light-pen driving chip U2. A laser emitted from a red light pen may be used to inspect fiber-optic circuits. In the present embodiment, when the multifunction module includes the first function module, the red-light-pen driving chip U2 adopts a driving chip of model SGM2019-ADJ; when the multifunction module includes the second function module, the red-light-pen driving chip U2 adopts a driving chip of model SGM2019-ADJYN5G. For specific implementations, other chips with the same function may also be used as alternatives.

In the present embodiment, a data port of the central control module is connected with a work indication module, the work indication module includes a light-emitting diode LED1 and a triode Q4, a positive pole of the light-emitting diode LED1 is connected to a +3.3V power supply, an emitter of the triode Q4 is grounded, and a base of the triode Q4 is connected to the data port of the central control module via a current limiting resistor R11. When the multifunction module includes the first function module, a negative pole of the light-emitting diode LED1 is connected to a collector of the triode Q4. When the multifunction module includes the second function module, a negative pole of the light-emitting diode LED1 is connected to a collector of the triode Q4 via a current limiting resistor R10.

In the present embodiment, a lithium battery is adopted for power supply. For specific implementations, dry cells or other batteries may also be used for power supply. The power supply module includes a charging interface, a charging management module, a lithium battery, and a power management module, the charging interface adopts a USB interface J3 and may adopt a DC interface or other interfaces in specific implementations. The charging interface is connected to a power input port of the charging management module, the lithium battery is connected to a power input port of the charging management module, so that the lithium battery is able to be charged via the charging management module. In the present embodiment, when the multifunction module includes the first function module, the charging management module adopts a charging management chip U7 of model LTC4054; when the multifunction module includes the second function module, the charging management module adopts a charging management chip U7 of model TC4056A. For specific implementations, other chips with the same function may also be used as alternatives. In the present embodiment, when the multifunction module includes the first function module, the power management module adopts a boost chip U1 of model SX1308 and the boost target is 6V; when the multifunction module includes the second function module, the power management module adopts a DC-DC boost chip U1 of model STI3508, which is used to boost the output power of the lithium battery to +9V for supplying power. A power output port of the DC-DC boost chip U1 is connected with a voltage regulator chip U6, and the voltage regulator chip U6 adopts a voltage regulator chip of model 78L06, which is able to regulate the power supply from +9V to +6V for supplying power.

In the present embodiment, the lithium battery is connected with a voltage regulator chip U3, which may convert the output power of the lithium battery to +3.3V for supplying power. When the multifunction module includes the first function module, the voltage regulator chip U3 adopts a voltage regulator chip of model XC6206P332MR; when the multifunction module includes the second function module, the voltage regulator chip U3 adopts a voltage regulator chip of model ME6206A33M3G.

Provided in the present disclosure is a multi-functional optical power meter, which allows for testing the optical power level, emits a laser to detect the fiber-optic circuit, provides the function of line alignment, line finding and network cable mounting, which automatically determines the status of line alignment or cable mounting, automatically detects the open-circuit, short-circuit and circuit-breaking status of the network cable, and directly displays them on a display screen, so that the various test parameters are seen intuitively.

In summary, the technical solution of the present disclosure may fully and effectively achieve the aforementioned purpose of the application, and the structural and functional principles of the present disclosure have been fully verified in the embodiments, which may achieve the expected efficacy and purpose, and a variety of changes or modifications may be made to the embodiments of the application without departing from the principles and substance of the present disclosure. Therefore, the present disclosure includes all substitutions within the scope of everything mentioned in the scope of the patent application, and any equivalent changes made within the scope of the patent applied for in the present disclosure are within the scope of the patent applied for in the present disclosure.

## Claims

1. A multi-functional optical power meter, comprising a central control module, a power supply module, an optical power meter module, and a multifunction module, wherein the optical power meter module and the multifunction module are connected to the central control module respectively, the power supply module is used to supply power, the multifunction module comprises a first function module and a second function module, the first function module comprises a line-alignment module and a line-finding module, and the second function module comprises a line-testing module.

2. The multi-functional optical power meter according to claim 1, wherein the optical power meter module comprises a fiber-optic interface P3, a first channel selector U8, a second channel selector U14, a primary amplifier U10 and a secondary amplifier U5, the fiber-optic interface P3 is connected to an input port of the primary amplifier U10, an output port of the primary amplifier U10 is simultaneously connected to an input port of the secondary amplifier U5 and a common port of the first channel selector U8, an output port of the secondary amplifier U5 is connected to a data port of the central control module, each channel port of the first channel selector U8 is connected with resistors with different resistances respectively, each resistor is connected to a reverse input port of the primary amplifier U10 respectively, each channel port of the second channel selector U14 is connected to each channel port of the first channel selector U8 respectively, a common port of the second channel selector U14 is connected to a data port of the central control module, and channel gating control ports of the first channel selector U8 and the second channel selector U14 are connected to data ports of the central control module respectively.

3. The multi-functional optical power meter according to claim 1, wherein the line-alignment module comprises a network interface J1 and a counter U4, each cable of the network interface J1 is connected to an output port of the counter U4 via a diode and a resistor respectively, diodes on each cable are connected in parallel with LEDs, a reset port of the counter U4 is connected to a collector of a triode Q13, the collector of the triode Q13 is connected to a +6V power supply, an emitter of the triode Q13 is grounded, a base of the triode Q13 is connected to a data port of the central control module, a pulse input port of the counter U4 is connected to a collector of a triode Q14, the collector of the triode Q14 is connected to a +6V power supply, an emitter of the triode Q14 is grounded, a base of the triode Q14 is connected to a data port of the central control module, and the network interface J1 comprises nine terminals, including RJ45-1, RJ45-2, RJ45-3, RJ45-4, RJ45-5, RJ45-6, RJ45-7, RJ45-8, and RJ45-9.

4. The multi-functional optical power meter according to claim 3, wherein the line-finding module comprises a first line-finding circuit and a second line-finding circuit; the first line-finding circuit comprises a triode Q12, a triode Q10, a triode Q9, and a triode Q11, the triode Q9 and the triode Q11 form a complementary amplifier circuit, a base of the triode Q12 is connected to a data port of the central control module via a resistor R24, the resistor R24 is connected in parallel with a capacitor C19, an emitter of the triode Q12 is grounded, the emitter of the triode Q12 is connected to the base of the triode Q12 via a resistor R26, a collector of the triode Q12 is connected to a +6V power supply, the collector of the triode Q12 is further connected to a base of a triode Q10, an emitter of the triode Q10 is grounded, a collector of the triode Q10 is connected to a +6V power supply, the collector of the triode Q10 is connected to a base of the triode Q9 and a base of the triode Q11, an emitter of the triode Q9 is connected to an emitter of the triode Q11, a collector of the triode Q9 is connected to a +6V power supply, a collector of the triode Q11 is grounded, and the terminals RJ45-4, RJ45-5, RJ45-7, RJ45-8 of the network interface J1 are connected to the emitter of the triode Q9 and the emitter of the triode Q11 via capacitors respectively; and the second line-finding circuit comprises a triode Q8, a triode Q5, and a triode Q7, the triode Q5 and the triode Q7 form a complementary amplifier circuit, a base of the triode Q8 is connected to a data port of the central control module via a resistor R15, the resistor R15 is connected in parallel with a capacitor C6, an emitter of the triode Q8 is grounded, the emitter of the triode Q8 is connected to a base of the triode Q8 via a resistor R19, a collector of the triode Q8 is connected to a +6V power supply, the collector of the triode Q8 is connected to a base of the triode Q5 and a base of the triode Q7, an emitter of the triode Q5 is connected to an emitter of the triode Q7, a collector of the triode Q5 is connected to a +6V power supply, a collector of the triode Q7 is grounded, and the terminals RJ45-1, RJ45-2, RJ45-3, RJ45-6, RJ45-9 of the network interface J1 are connected to the emitter of the triode Q5 and the emitter of the triode Q7 via capacitors respectively.

5. The multi-functional optical power meter according to claim 1, wherein the line-testing module comprises a network interface J5, a counter U12, a channel selector U13, and a counter U11, each cable of the network interface J5 is connected to an output port of the counter U12 via an MOS transistor and a light-emitting diode respectively, gates of each MOS transistor are all connected to a collector of a triode Q17, the collector of the triode Q17 is connected to a +9V power supply, an emitter of the triode Q17 is grounded, a base of the triode Q17 is connected to a data port of the central control module, a reset port of the counter U12 is connected to a collector of a triode Q14, the collector of the triode Q14 is connected to a +9V power supply, an emitter of the triode Q14 is grounded, a base of the triode Q14 is connected to a data port of the central control module, a pulse input port of the counter U12 is connected to a collector of a triode Q16, the collector of the triode Q16 is connected to a +9V power supply, an emitter of the triode Q16 is grounded, a base of the triode Q16 is connected to a data port of the central control module, each cable of the network interface J5 is simultaneously connected to an output port of the channel selector U13 via an MOS transistor respectively, gates of each MOS transistor are all connected to a collector of a triode Q5, the collector of the triode Q5 is connected to a +9V power supply, an emitter of the triode Q5 is grounded, a base of the triode Q5 is connected to a data port of the central control module, a channel gating control port of the channel selector U13 is connected to the data port of the central control module, and a common port of the channel selector U13 is connected to the counter U11.

6. The multi-functional optical power meter according to claim 1, wherein a data port of the central control module is connected with a display module, and the display module adopts a display interface.

7. The multi-functional optical power meter according to claim 6, wherein the data port of the central control module is connected with a back light module and the back light module adopts a back light interface P4 when the multifunction module comprises a first function module.

8. The multi-functional optical power meter according to claim 1, wherein a data port of the central control module is connected with a red-light-pen module, the red-light-pen module comprises a red-light-pen driving chip U2 and a red-light-pen connector P1, the red-light-pen driving chip U2 is connected to the data port of the central control module, and the red-light-pen connector P1 is connected to the red-light-pen driving chip U2.

9. The multi-functional optical power meter according to claim 1, wherein a data port of the central control module is connected with a work indication module, the work indication module comprises a light-emitting diode LED1 and a triode Q4, a positive pole of the light-emitting diode LED1 is connected to a +3.3V power supply, an emitter of the triode Q4 is grounded, and a base of the triode Q4 is connected to the data port of the central control module via a current limiting resistor R11;
when the multifunction module comprises the first function module, a negative pole of the light-emitting diode LED1 is connected to a collector of the triode Q4; and when the multifunction module comprises the second function module, a negative pole of the light-emitting diode LED1 is connected to a collector of the triode Q4 via a current limiting resistor R10.

10. The multi-functional optical power meter according to claim 1, wherein the power supply module comprises a charging interface, a charging management module, a lithium battery, and a power management module, the charging interface adopts a USB interface J3, the charging interface is connected to a power input port of the charging management module, the lithium battery is connected to a power input port of the charging management module, and the lithium battery is connected to the power management module.

11. The multi-functional optical power meter according to claim 10, wherein the lithium battery is connected with a voltage regulator chip U3.

12. The multi-functional optical power meter according to claim 10, wherein a power output port of the power management module is connected with a voltage regulator chip U6 when the multifunction module comprises the second function module.
